# EUROPEAN PATENT SPECIFICATION

(11) **EP 2 911 434 B1**
(45) Date of publication and mention of the grant of the patent: **11.07.2018**
(21) Application number: 15154541.5
(22) Date of filing: 10.02.2015
(51) Int. Cl.: H04W 12/04, H04W 12/02, H04L 29/06

(54) **Information setting device, information setting method, non-transitory computer-readable storage medium, and wireless communication system**
Informationseinstellungsvorrichtung, Informationseinstellungsverfahren, übergangsloses computerlesbares Speichermedium und drahtloses Kommunikationssystem
Dispositif de réglage d'informations, procédé de réglage d'informations, support de stockage lisible par ordinateur non transitoire, et système de communication sans fil

(30) Priority: 19.02.2014 JP 2014029515
(43) Date of publication of application: 26.08.2015
(73) Proprietor: Yokogawa Electric Corporation, Tokyo 180-8750 (JP)
(72) Inventor: Kodama, Kazutoshi, Tokyo (JP); Gotou, Hirotsugu, Tokyo (JP)
(74) Representative: Henkel, Breuer & Partner

(56) References cited:
- EP-A2- 2 381 648
- EP-A2- 2 418 553
- US-A1- 2013 267 164

## Description

### BACKGROUND OF THE INVENTION

### Field of the Invention

The disclosure relates to an information setting device, an information setting method, a non-transitory computer-readable storage medium, and a wireless communication system.

### Description of Related Art

Recently, in a plant and a factory, a wireless field device (for example, a measurement device and a manipulation device) which is capable of communicating wirelessly is installed, and a wireless communication system which communicates a control signal for controlling the wireless field device and a measurement signal obtained by the wireless field device via a wireless network is implemented. For example, the wireless communication system communicates in conformity with an industrial wireless communication standard such as ISA 100.11a, WirelessHART (registered trademark), and so on.

In a case where the wireless device such as the wireless field device joins the wireless network, there is a need to set device information (for example, a network parameter and a security parameter) called "provisioning" to the wireless device. The method of the "provisioning" includes an OTA (Over The Air) provisioning and an OOB (Out-Of-Band) provisioning. In a case of the OTA provisioning, the device information is set by communicating wirelessly via the wireless network. In a case of the OOB provisioning, the device information is set by communicating wirelessly via a communication means (for example, a wire communication or an infrared communication) other than the wireless network.

When the wireless device to which the provisioning is performed joins the wireless network, the wireless device transmits a join request for joining the wireless network to a manager of the wireless communication system. The manager which is received the join request performs an authentication process by using information (specifically, a join key) included in the join request. In a case where the authentication is successful, the manager accepts the join of the wireless device which transmitted the join request. On the other hand, in a case where the authentication is unsuccessful, the manager rejects the join of the wireless device. As described above, a join process is performed.

For example, in Japanese Unexamined Patent Application Publication No. 2013-78107, an example of the OTA provisioning which is performed to make a wireless device join a wireless network is described. Also, in Japanese Unexamined Patent Application Publication No. 2013-218532, an example of the OOB provisioning, which is performed to make a wireless device join a wireless network, by using a provisioning device (information setting device) is described.

Because workers work alternately in the plant and the factory, there is a possibility that a malicious person creeps into the plant and the factory. In the OTA provisioning described above, because setting information which should be set to the wireless device is transmitted via the wireless network, there is a possibility that the setting information is stolen. In a case where the setting information is stolen by the malicious person, because the malicious person can hack into the wireless network, the OTA has a security problem.

On the other hand, in the OOB provisioning described above, because the setting information which should be set to the wireless device is transmitted via a wire communication or an infrared communication, of which communication distance is more limited than the wireless communication via the wireless network, it is extremely improbable that the setting information is stolen. Therefore, because the OOB provisioning causes the setting information to be stolen less than the OTA provisioning, the OOB has an advantage in security over the OTA provisioning.

In the OOB provisioning, there is a need to set the information, which is set to the wireless device by using the provisioning device, to the manager of the wireless communication system. Although the information is set to the wireless device by the field worker, the information is set to the manager by another person (for example, a plant operator). For the reason, in a case where the provisioning process with respect to the wireless device is completed, the field worker passes the information, which is set to the wireless device, to the plant worker. The plant worker sets the information which is passed by the field worker to the manager of the wireless system. The field worker passes the information to the plant operator with a recording medium such as a USB (Universal Serial Bus) memory, and so on.

However, in a case where the field worker passes the information with the recording medium such as the USB memory, there is a possibility that the recording medium is lost caused by a mishandling between the field worker and the plant operator. For the reason, there is a security problem. In a plant and a factory, there is a case that accessible areas are definitely set to the workers (field workers and plant operators) so as to ensure the security. In this case, the field worker has difficulty passing the recording medium to the plant operator, and the information cannot be set to the manager easily. US 2013/267164 A1 discloses a wireless communication system for communicating via a wireless communication network, including: a setting device configured to create a first information needed for joining a wireless device into the wireless communication network and set the first information in the wireless device to be joined into the wireless communication network, the setting device being configured to create setting information that correlates the first information with a second information containing at least one of information indicating a method of setting the first information and information indicating an operator who performed an operation of setting the first information; and a management device configured to select the wireless device, which is to be joined into the wireless communication network, by using the setting information that has been created by the setting device.

### SUMMARY

According to the present invention, there is provided an information setting device as set out in independent claim 1, an information setting method as set out in independent claim 7, and a non-transitory computer readable storage medium as set out in independent claim 12. Advantageous developments are defined in the dependent claims.

### BRIEF DESCRIPTION OF THE DRAWINGS

FIG. 1 is a block diagram illustrating a wireless communication system in the first embodiment.
FIG. 2 is a block diagram illustrating a main part of the provisioning device as an information setting device in the first embodiment.
FIG. 3 is a timing chart illustrating an information setting method in the first embodiment.
FIG. 4 is a timing chart illustrating the process of the step S18 of FIG. 3 in detail.
FIG. 5 is a timing chart illustrating a first modified example of the information setting method of the first embodiment.
FIG. 6 is a timing chart illustrating a second modified example of the information setting method of the first embodiment.
FIG. 7 is a block diagram illustrating a wireless communication system in the second embodiment.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An object of some embodiments of the present invention is to provide an information setting device, an information setting method, a non-transitory computer-readable storage medium, and a wireless communication system which can set setting information, which is set to the wireless device, to the manager easily with ensuring a security.

### (First Embodiment)

### [Wireless Communication System]

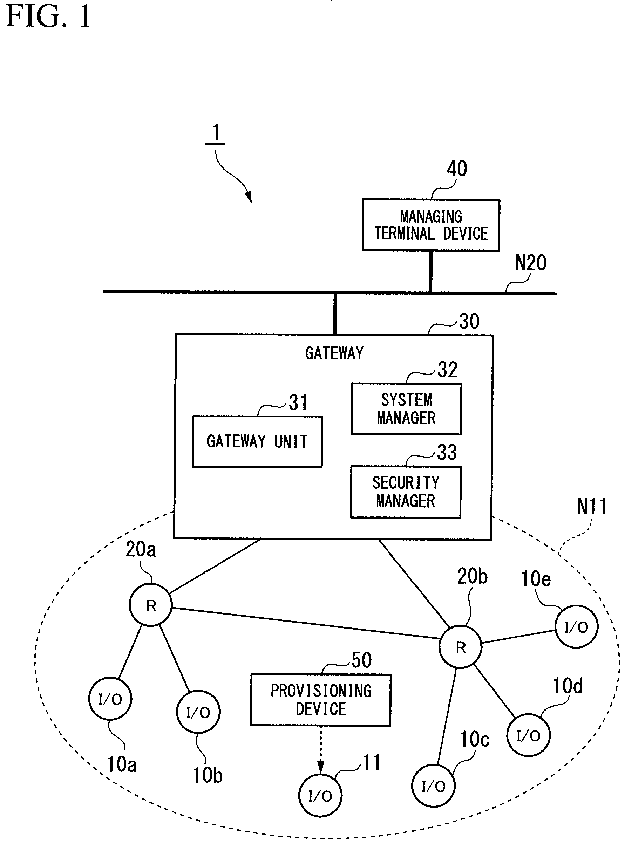

FIG. 1 is a block diagram illustrating a wireless communication system in the first embodiment. As shown in FIG. 1, the wireless communication system 1 is equipped with an I/O devices 10a through 10e, I/O device 11 (wireless device), a routing devices 20a and 20b, a gateway 30, a managing terminal device 40, and a provisioning device 50 (information setting device). In the wireless communication system 1, wireless communications are performed via a wireless network N11.

For example, the wireless communication system 1 is installed in a plant and a factory (hereinafter called simply "plant" as a generic name of them). The plant includes an industrial plant such as a chemical plant, a plant managing and controlling a wellhead (for example, a gas field and an oil field), a plant managing and controlling a generation of electric power (for example, water power, fire power, and nuclear power), a plant managing and controlling a power harvesting (for example, solar power and wind power), a plant managing and controlling water supply and sewerage systems, a dam, and so on.

The wireless network N11 shown in FIG. 1 is established by the I/O devices 10a through 10e, the routing devices 20a and 20b, and the gateway 30. The wireless network N11 is a power-saving and low-speed network (narrow communication band). A plant network N20, to which the gateway 30 and the managing terminal device 40 are connected, is a wired network which has a wide communication band.

The I/O devices 10a through 10e join the wireless network N11. The I/O device 11 is to join the wireless network N11 afterward. Numbers of the I/O devices 10a through 10e, the I/O device 11, and the routing devices 20a and 20b are arbitrary.

The I/O devices 10a through 10e and the I/O device 11 are such as a sensor device (for example, a pressure meter, a flowmeter, a temperature sensor, and a gas sensor), a valve device (for example, a flow control valve and an on-off valve), an actuator device (for example, a fan and a motor), an imaging device (for example, a camera and a video camera recording circumstances and objects in the plant), a sound device (for example, a microphone collecting abnormal noise in the plant, and a speaker generating alarm sound), a position detection device outputting a position information of each device, and other devices. The I/O devices 10a through 10e and the I/O device 11 can communicate in conformity with a wireless communication standard for industrial automation such as ISA 100.11a.

Each of the I/O devices 10a through 10e and the I/O device 11 is equipped with an infrared communication function. The I/O devices 10a through 10e and the I/O device 11 can transmit various types of information to an external infrared communication device and receive various types of information from the external infrared communication device. For example, the I/O device 11, which does not join the wireless network N11, transmits and receives provisioning information (first information) by making infrared communication with the provisioning device 50. The provisioning information includes "EUI64" which is identification information (unique information for each device) preliminarily allocated to the I/O device 11, "Network ID" which is an identifier preliminarily allocated to the wireless network N11, "Join Key" which corresponds to a password necessary for joining to the wireless network N11, and so on.

Also, the I/O devices 10a through 10e and the I/O device 11 can transmit and receive information (second information) other than the provisioning information by making infrared communication with the provisioning device 50. The information, which is other than the provisioning information, is such as setting information (for example, a measurement condition and a manipulation condition) set to the I/O devices 10a through 10e or the I/O device 11 in the past, information indicating a current state of the I/O devices 10a through 10e or the I/O device 11, and so on.

The routing devices 20a and 20b communicate wirelessly in conformity with the ISA 100.11a between the I/O devices 10a through 10e and the gateway 30. The routing devices 20a and 20b transmit route information of the wireless network N11 and messages. The routing devices 20a and 20b relays data which is transmitted and received by the I/O devices 10a through 10e and the gateway 30. The I/O devices 10a through 10e, the routing devices 20a and 20b, and the gateway 30 are connected wirelessly with each other, the star-mesh type wireless network N11 is established. An I/O device which is equipped with a relay function of the routing devices 20a and 20b may be included in the network N11 instead of the routing devices 20a and 20b.

The gateway 30 is equipped with a gateway unit 31, a system manager 32 (manager), and a security manager 33 (manager). The gateway 30 controls a communication performed by the wireless communication system 1. The gateway unit 31 connects the wireless network N11 to the plant network N20. The wireless network N11 is established by the I/O devices 10a through 10e, the routing devices 20a and 20b, and the gateway 30. The managing terminal device 40 is connected to the plant network N20. The gateway unit 31 relays various types of data which are transmitted and received by the I/O devices 10a through 10e and the managing terminal device 40. The gateway unit 31 communicates in conformity with the wireless communication standard ISA 100.11a.

The system manager 32 manages and controls the wireless communication performed via the wireless network N11. Specifically, the system manager 32 manages and controls resources such as a frequency channel, a communication schedule, and a communication route of the wireless network N11. The system manager 32 performs a join process for making the I/O device 11 or the provisioning device 50 join the wireless network N11 in cooperation with the security manager 33.

The security manager 33 manages a security under the system manager 32. For example, the provisioning information (authentication information) is set to the security manager 33. The provisioning information indicates the I/O devices and the provisioning device 50 which are permitted to join the wireless network N11. The security manager 33 manages the I/O devices and the provisioning device 50 which join the wireless network N11 with reference to the provisioning information. Although detail explanations will be described later, the provisioning information which is used for managing the I/O devices is information which is set by the provisioning device 50 via the wireless network N11.

The managing terminal device 40 is connected to the plant network 20. For example, the managing terminal device 40 is operated by a plant operator of the wireless communication system 1, and the managing terminal device 40 is used for managing the wireless communication system 1. For example, the managing terminal device 40 collects measurement data which is measured by the I/O devices 10a through 10e, and the managing terminal device 40 sets parameters to the I/O devices 10a through 10e.

For example, the provisioning device 50 is operated by a worker who places the I/O device 11 which does not join the wireless network N11, and the provisioning device 50 sets various types of information to the I/O device 11. Specifically, the provisioning device 50 creates the provisioning information which is necessary for making the I/O device 11 join the wireless network N11, and the provisioning device 50 sets the provisioning information to the I/O device 11 by performing the provisioning with respect to the I/O device 11.

The provisioning device 50 is equipped with a serial communication function such as an infrared communication function or RS-232C. For the reason, the provisioning device 50 can perform an OOB provisioning in which the provisioning is performed by using a communication means (for example, the infrared communication function or the RS-232C) other than the wireless communication via the wireless network N11. The provisioning device 50 communicates with the I/O device 11 by using the communication means described above, and the provisioning device 50 can obtain information (for example, information set to the I/O device 11 in the past, information indicating a current state of the I/O device 11, and so on) other than the provisioning information from the I/O device 11.

The provisioning device 50 can communicates wirelessly via the wireless network N11. The provisioning device 50 can transmit the provisioning information, which is set to the I/O device 11, to the gateway 30 (the security manager 33) via the wireless network N11. The provisioning device 50 transmits the provisioning information via the wireless network N11 so that the provisioning information can be set to the security manager 33 easily with ensuring the security.

### [Information Setting Device]

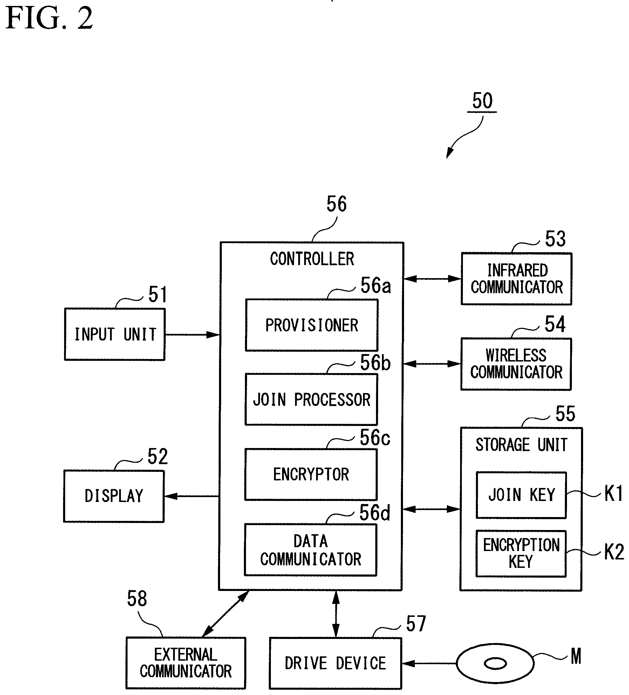

FIG. 2 is a block diagram illustrating a main part of the provisioning device as an information setting device in the first embodiment. As shown in FIG. 2, the provisioning device 50 is equipped with an input unit 51, a display 52, an infrared communicator 53 (first communicator), a wireless communicator 54 (second communicator), a storage unit 55, a controller 56, a drive device 57, and an external communicator 58. The provisioning device 50 is a computer in which one or more programs for implementing a function for setting the provisioning information to the I/O device 11 and a function for transmitting the provisioning information to the gateway 30 (security manager 33) via the wireless network N11 are installed. For example, the provisioning device 50 is a portable notebook computer or a tablet computer.

The input unit 51 is equipped with pointing devices such as a keyboard and a mouse. For example, the input unit 51 inputs an instruction of the worker who operates the provisioning device 50. The display 52 is equipped with a display device such as a liquid crystal display device. The display 52 displays various types of information under the control of the controller 56. The infrared communicator 53 makes an infrared communication with the I/O device 11 and transmits various types of information such as the provisioning information under the control of the controller 56. The infrared communicator 53 makes an infrared communication with the I/O device 11, and the infrared communicator 53 transmits and receives various types of information such as the provisioning information under the control of the controller 56. The wireless communicator 54 communicates wirelessly via the wireless network N11 under the control of the controller 56. The wireless communicator 54 communicates in conformity with the wireless communication standard ISA 100.11a.

The storage unit 55 is equipped with a non-volatile memory such as a flash ROM (Read Only Memory), an EEPROM (Electrically Erasable and Programmable ROM), and so on. The storage unit 55 stores various types of keys used by the provisioning device 50. Specifically, the storage unit 55 stores a join key K1 and an encryption key K2. The join key K1 is necessary for making the provisioning device 50 join the wireless network N11. The encryption key K2 is used for encrypting the provisioning information which is to be transmitted to the gateway 30 (the security manager 33). Although not shown in FIG. 2, the storage unit 55 stores a network ID of the wireless network N11 with the join key K1. The network ID is necessary for making the provisioning device 50 join the wireless network N11.

The controller 56 is equipped with a provisioner 56a (setter), a join processor 56b (processor), an encryptor 56c, and a data communicator 56d (transmitter). The controller 56 controls the operation of the provisioning device 50 in accordance with the instruction input from the input unit 51. The provisioner 56a transmits various types of information to the I/O device 11 and receives the various types of information from the I/O device 11 by controlling the infrared communicator 53. The provisioner 56a creates the provisioning information and sets the created provisioning information to the I/O device 11.

The join processor 56b communicates with the gateway 30 (the system manager 32) by controlling the wireless communicator 54, and the join processor 56b performs a process for joining the wireless network N11. Specifically, the join processor 56b transmits a join request, which includes the join key K1 stored in the storage unit 55, to the gateway 30. The join request is a request for joining the wireless network N11.

The encryptor 56c encrypts the provisioning information, which is to be transmitted to the gateway 30 (security manager 33) via the wireless network N11, by using the encryption key K2 stored in the storage unit 55. The provisioning information is encrypted so as to prevent the provisioning information from being stolen and ensure the security. The data communicator 56d transmits the provisioning information, which is encrypted by the encryptor 56c, to the gateway 30 (the security manager 33) via the wireless network N11 by controlling the wireless communicator 54.

The drive device 57 reads data and a program which are recorded in a computer-readable recording medium M such as CD-ROM or DVD (registered trademark) -ROM. The external communicator 58 makes a communication (a wire communication or a wireless communication) via an external network such as an internet under the control of the controller 56. The external communicator 58 can download data and a program, which are same as the data and the program recorded in the recording medium M, from a server device (not shown) which is connected to the external network.

The drive device 57 reads the program recorded in the recording medium M, and the read program is installed so that the functions (specifically, the provisioner 56a, the join processor 56b, the encryptor 56c, and the data communicator 56d), which are included in the controller 56 of the provisioning device 50, can be implemented as a software.

### [Information Setting Method]

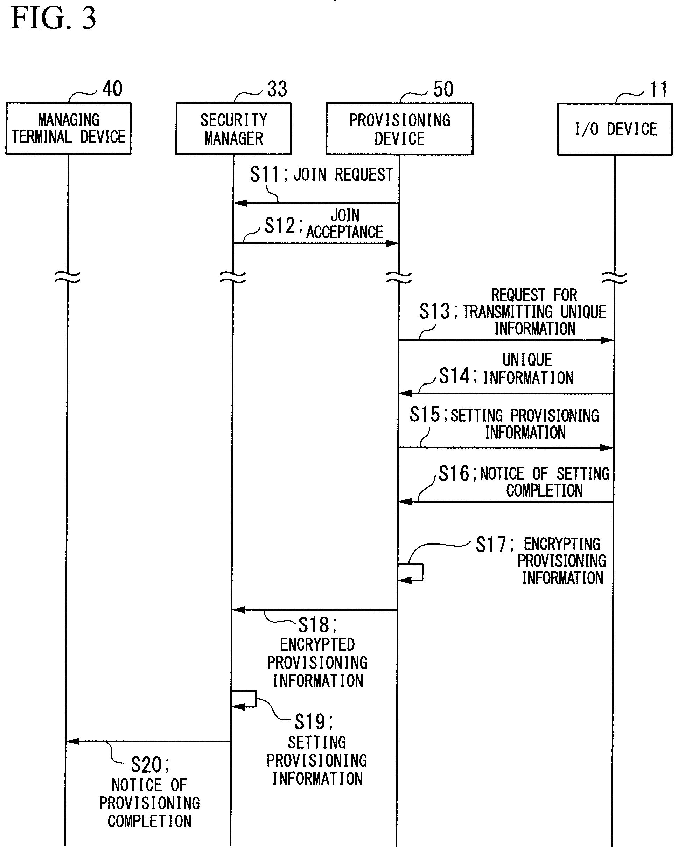

FIG. 3 is a timing chart illustrating an information setting method in the first embodiment. To describe simply, the I/O device 11 and the provisioning device 50 which are to join the wireless network N11 are disposed at a position where the I/O device 11 is disposed. At the position, wireless signals which are transmitted via the wireless network N11 can be received.

In the present embodiment, before the worker performs the provisioning with respect to the I/O device 11 by using the provisioning device 50, the operation for making the provisioning device 50 join the wireless network N11 is performed. Specifically, the worker inputs an instruction for making the provisioning device 50 join the wireless network N11 by using the input unit 51 of the provisioning device 50.

In response to the instruction of the worker, the join key K1 and the network ID (not shown), which are stored in the storage unit 55 of the provisioning device 50, are read by the controller 56. The join key K1 and the network ID which are read by the controller are input to the join processor 56b. After that, the join processor 56b controls the wireless communicator 54, and the wireless communicator 54 transmits the join request which includes the join key K1 and the network ID to the gateway 30 (step S11).

After the gateway 30 receives the join request transmitted from the provisioning device 50, the system manager 32 performs the join process for making the provisioning device 50 join the wireless network N11 in cooperation with the security manager 33. The provisioning information (authentication information) of the provisioning device 50 is preliminarily set to the security manager 33. For the reason, the system manager 32 accepts the join request transmitted from the provisioning device 50, and the system manager 32 transmits a join acceptance for making the provisioning device 50 join the wireless network N11 to the provisioning device 50 (step S12: third step). The provisioning device 50 can join the wireless network N11 by receiving the join acceptance.

After completion of the processes described above, the worker performs the provisioning with respect to the I/O device 11 by using the provisioning device 50. The worker identifies the I/O device 11 which is to be performed the provisioning, and the worker instructs a start of the provisioning by using the input unit 51 of the provisioning device 50. The provisioning with respect to the I/O device 11 is started in accordance with the start instruction.

When the provisioning is started, the provisioner 56a makes the infrared communication with the I/O device 11 by controlling the infrared communicator 53. The provisioning device 50 transmits a request for transmitting unique information to the I/O device 11 (step S13). The unique information is preliminarily allocated to the I/O device 11. When the I/O device 11 receives the request for transmitting, the I/O device 11 transmits the unique information to the provisioning device 50 (step S14). Specifically, the I/O device 11 transmits the "EUI64" which is preliminarily allocated to the I/O device 11, information (vendor ID) which represents a vendor (a manufacturer or a supplier) of the I/O device 11, information (a device type) which represents a type of the I/O device 11, and so on.

When the provisioning device 50 receives the unique information from the I/O device 11, the provisioner 56a creates the provisioning information, which is to be set to the I/O device 11, by using the unique information. Specifically, the provisioner 56a creates the provisioning information which includes the unique information and the join key. The join key is necessary for making the I/O device 11 join the wireless network N11. The join key which is included in the provisioning information may be same as the join key K1 which is stored in the storage unit 55. Also, the join key which is included in the provisioning information may be different from the join key K1.

After the provisioner 56a creates the provisioning information, the provisioner 56a makes the infrared communication with the I/O device 11 by controlling the infrared communicator 53 again. The provisioning device 50 transmits the created provisioning information to the I/O device 11 (step S15). The I/O device 11 receives the provisioning information from the provisioning device 50, and the I/O device 11 sets the provisioning information. After the I/O device 11 completes the setting of the provisioning information, the I/O device 11 transmits a notice of setting completion to the provisioning device 50 (step S16). By these processes, the provisioning with respect to the I/O device 11 is completed.

When the provisioning device 50 receives the notice of setting completion from the I/O device 11, the controller 56 reads the encryption key K2 from the storage unit 55 of the provisioning device 50 and inputs the encryption key K2 to the encryptor 56c. The encryptor 56c encrypts the provisioning information which is created by the provisioner 56a (the provisioning information which is set to the I/O device 11) (step S17).

After the encryptor 56c completes the encryption of the provisioning information, the data communicator 56d controls the wireless communicator 54 to transmit the provisioning information, which is encrypted by the encryptor 56c, to the gateway 30 (the security manager 33) via the wireless network N11 (step S18: first step). Specifically, the provisioning information is transmitted from the provisioning device 50 to the security manager 33 by using UploadDownload object which is specified by the wireless communication standard ISA 100.11a.

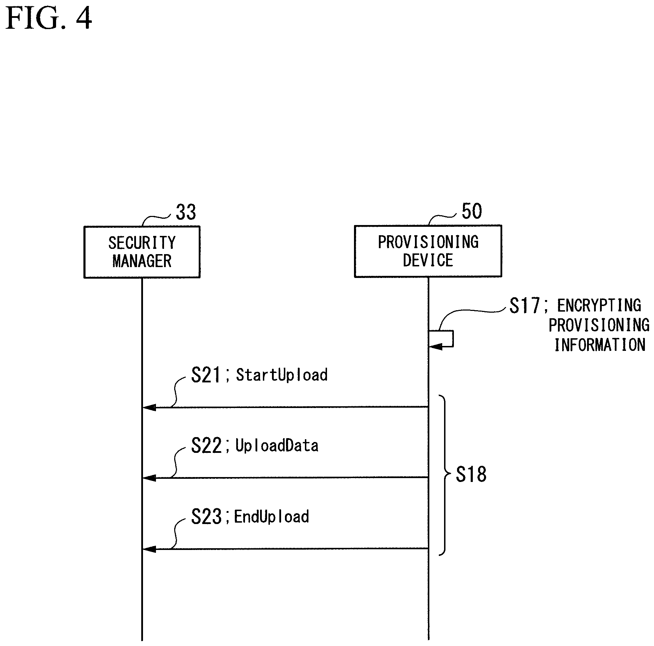

FIG. 4 is a timing chart illustrating the process of the step S18 of FIG. 3 in detail. As shown in FIG. 4, after the encryptor 56c completes the encryption process (step S17), StartUpload of the UploadDownload object is performed. At the StartUpload, the data communicator 56d transmits a notice of starting a transmission of the provisioning information to the security manager 33 (step S21).

Next, UploadData of the UploadDownload object is performed. At the UploadData, the data communicator 56d transmits the encrypted provisioning information to the security manager 33 (step S22). After the data communicator 56d completes the transmission of the provisioning information, EndUpload of the UploadDownload object is performed. At the EndUpload, the data communicator 56d transmits a notice of completing the transmission of the provisioning information to the security manager 33 (step S23).

When the gateway 30 receives the provisioning information (the encrypted provisioning information) from the provisioning device 50, the gateway unit 31 passes the provisioning information to the security manager 33. The security manager 33 decrypts the encrypted provisioning information, and the security manager 33 sets the decrypted provisioning information as the authentication information of the I/O device 11 (step S19: second step).

After the security manager 33 completes the setting of the provisioning information, the gateway 30 (the security manager 33) transmits a notice of the provisioning completion (a notice representing that the provisioning with respect to the I/O device 11 is completed) to the managing terminal device 40 (step S20). When the gateway 30 transmits the notice of the provisioning completion, a series of the processes shown in FIG. 3 is completed. When the plant operator of the wireless communication system 1 refers to the notice of the provisioning completion which is displayed on the managing terminal device 40, the plant operator can recognize the completion of the provisioning with respect to the I/O device 11.

After the processes described above are completed, the I/O device 11, to which the provisioning was performed, joins the wireless network N11. Specifically, the worker inputs an instruction for making the I/O device 11 join the wireless network N11 by manipulating a manipulator (not shown) which is disposed in the I/O device 11. When the instruction is input, the I/O device 11 performs processes which are same as the processes performed when the provisioning device 50 joins the wireless network N11.

Specifically, the I/O device 11 transmits a join request including the provisioning information, which is set to the I/O device 11 at the step S15 in FIG. 3, to the gateway 30. When the gateway 30 receives the join request transmitted from the I/O device 11, the system manager 32 performs a join process for making the I/O device 11 join the wireless network N11 in cooperation with the security manager 33.

The provisioning information of the I/O device 11 is set to the security manager 33 as the authentication information at the step S19 in FIG. 3. For the reason, the system manager 32 accepts the join request transmitted from the I/O device 11, and the system manager 32 transmits a join acceptance for joining the wireless network N11 to the I/O device 11. The I/O device 11 can join the wireless network N11 by receiving the join acceptance.

As described above, in the present embodiment, the provisioning device 50, which performs the provisioning with respect to the I/O device 11, can join the wireless network N11. Also, the provisioning device 50 transmits the provisioning information which is set to the I/O device 11 to the gateway 30 (the security manager 33) via the wireless network N11. Because there is no need to pass the provisioning information with the recording medium such as the USB memory, the provisioning information which is set to the I/O device 11 can be easily set to the security manager 33 of the gateway 30 with ensuring the security.

### (First Modified Example)

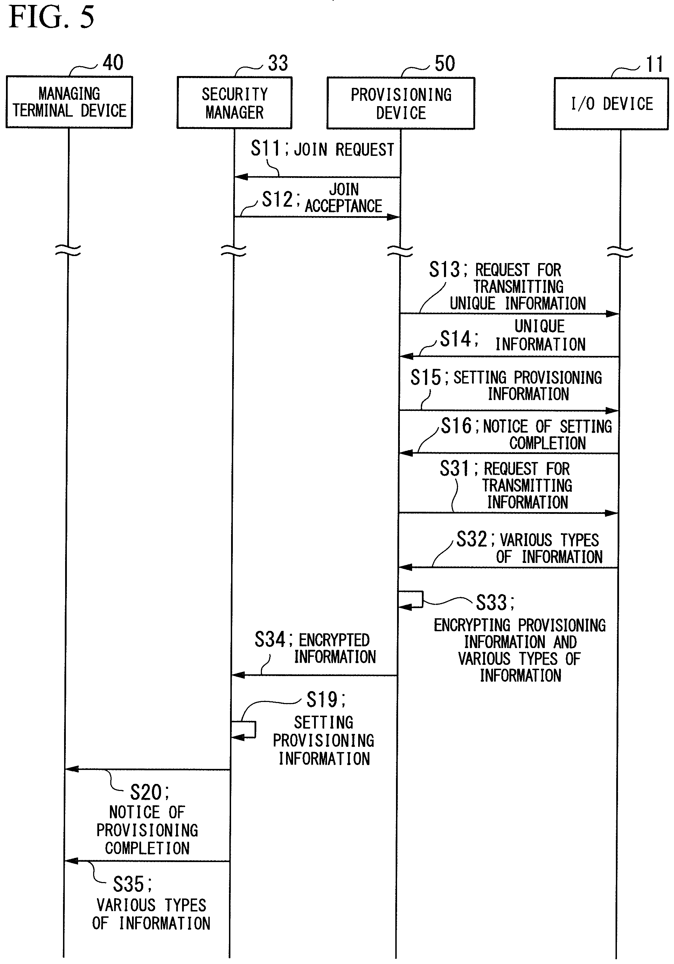

FIG. 5 is a timing chart illustrating a first modified example of the information setting method of the first embodiment. In FIG. 5, parts that correspond to those in FIG. 3 are assigned the same reference numerals. In the present modified example, information (information other than the provisioning information) which is obtained from the I/O device 11 is transmitted to the gateway 30 with the provisioning information.

In the present modified example, as shown in FIG. 5, when the I/O device 11 transmits the notice of setting completion to the provisioning device 50 (step S16), the provisioning device 50 transmits a request for transmitting information to the I/O device 11 (step S31). When the I/O device 11 receives the request for transmitting information, the I/O device 11 transmits various types of information to the provisioning device 50 (step S32). The various types of information are such as setting information (for example, a measurement condition and a manipulation condition) set to the I/O device 11 in the past, information indicating a current state of the I/O device 11, and so on.

When the provisioning device 50 receives the various types of information which are transmitted from the I/O device 11, the encryptor 56c encrypts the provisioning information which is created by the provisioner 56a (the provisioning information which is set to the I/O device 11) and the various types of information which are obtained at the step S32 (step S33). After the encryptor 56c completes the encryption of the provisioning information and the various types of information, the data communicator 56d transmits the provisioning information and the various types of information, which are encrypted by the encryptor 56c, to the gateway 30 via the wireless network N11 (step S34).

When these processes described above are completed, same as the processes shown in FIG. 3, the security manager 33 sets the provisioning information transmitted from the provisioning device 50 as the authentication information of the I/O device 11 (step S19), and the security manager 33 transmits the notice of the provisioning completion to the managing terminal device 40 (step S20). Further, the gateway 30 transmits the various types of information, which are transmitted from the provisioning device 50, to the managing terminal device 40 with the provisioning information (step S35).

As described above, in the present modified example, the various types of information, which are other than the provisioning information obtained from the I/O device 11, are transmitted to the gateway 30 via the wireless network N11 with the provisioning information, and the various types of information are also transmitted to the managing terminal device 40. Because the gateway 30 and the managing terminal device 40 can obtain the information, which is necessary for managing the I/O device 11, via the wireless network N11 without the worker, the I/O device 11 can be managed easily with ensuring the security.

### (Second Modified Example)

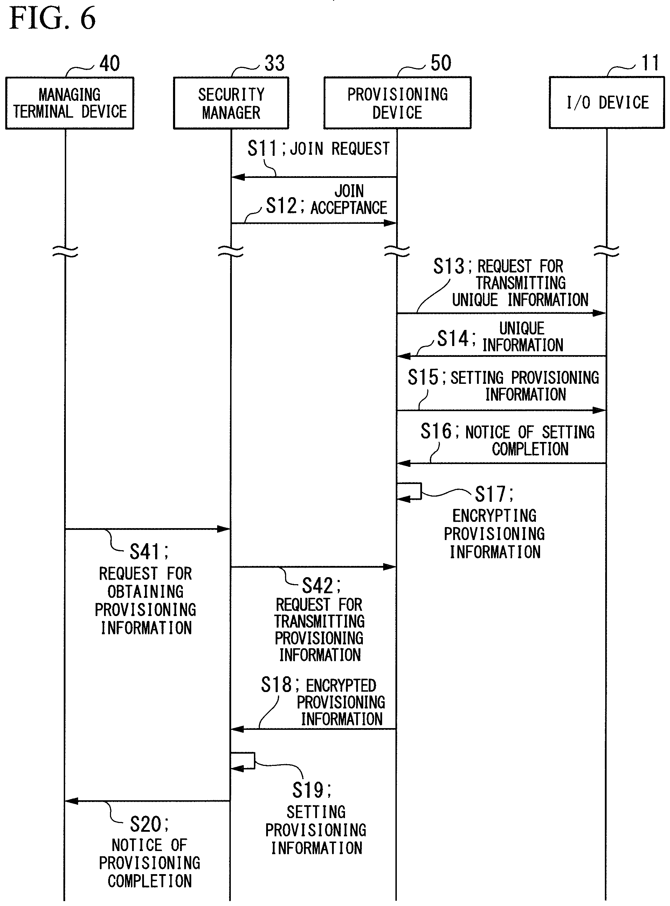

FIG. 6 is a timing chart illustrating a second modified example of the information setting method of the first embodiment. In FIG. 6, same as FIG. 5, parts that correspond to those in FIG. 3 are assigned the same reference numerals. Although the provisioning device 50 transmits the provisioning information to the wireless network N11 autonomously in the first embodiment and the first modified example, the provisioning device 50 transmits the provisioning information to the wireless network N11 in response to an instruction transmitted from the managing terminal device 40 in the present modified example.

In the present modified example, as shown in FIG. 6, when the encryptor 56c completes the encryption of the provisioning information which is set to the I/O device 11 (step S17), the provisioning device 50 does not transmit the provisioning information to the wireless network N11. After the provisioning with respect to the I/O device 11 is completed, the managing terminal device 40 transmits a request for obtaining the provisioning information (request for transmitting information) to the gateway 30 (step S41). When the gateway 30 receives the request for obtaining the provisioning information, the gateway 30 transmits a request for transmitting the provisioning information (request for transmitting information) to the provisioning device 50 (step S42).

When the provisioning device 50 receives the request for transmitting the provisioning information, the data communicator 56d controls the wireless communicator 54 to transmit the provisioning information, which is encrypted by the encryptor 56c, to the gateway 30 (the security manager 33) via the wireless network N11 (step S18). After that, same as the processes shown in FIG. 3, the security manager 33 sets the provisioning information transmitted from the provisioning device 50 as the authentication information of the I/O device 11 (step S19), and the security manager 33 transmits the notice of the provisioning completion to the managing terminal device 40 (step S20).

As described above, in the present modified example, the provisioning device 50 transmits the provisioning information to the wireless network N11 in response to the instruction (request for transmitting information) which is transmitted from the managing terminal device 40. There is a case that the worker manipulating the provisioning device 50 is not authorized to manipulate the gateway 30 but the plant operator manipulating the managing terminal device 40 is authorized to manipulate the gateway 30. In the present modified example, because the provisioning information can be set to the gateway 30 (the security manager 33) in response to the instruction of a person (the plant operator manipulating the managing terminal device 40) authorized to manipulate the gateway 30, it is appropriate for ensuring the security.

### (Second Embodiment)

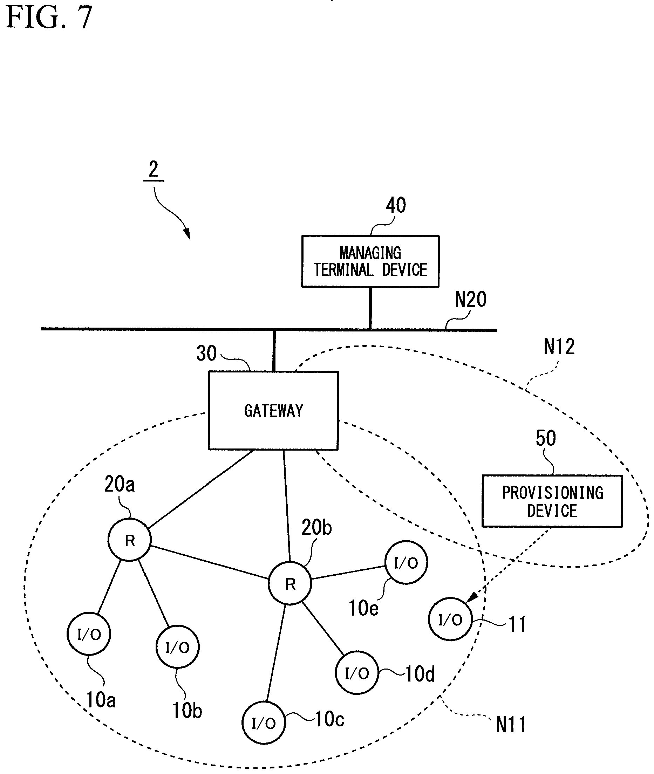

FIG. 7 is a block diagram illustrating a wireless communication system in the second embodiment. In FIG. 7, parts that correspond to those in FIG. 1 are assigned the same reference numerals. As shown in FIG. 7, a wireless communication system 2 in the second embodiment has substantially the same constitution as the wireless communication system 1 in the first embodiment. But the wireless communication system 2 differs from the wireless communication system 1 in that the gateway 30 manages not only the wireless network N11 (first wireless network) but also the wireless network N12 (second wireless network).

An identifier (network ID), which is different from the identifier of the wireless network N11, is allocated to the wireless network N12, and the provisioning device 50 joins the wireless network N12. The wireless network N12 is established so as to prevent a negative effect which occurs when the provisioning device 50 joins the wireless network N11.

The I/O devices 10a through 10e have already joined the wireless network N11, and the measurement data and the control data which are used for controlling the plant are transmitted and received. In a case where the provisioning device 50 joins the wireless network N11, there is a possibility of negative effects such as delay of a control loop which is implemented in the plant and shortage of communication resources. For the reason, in the present embodiment, the wireless network N12 which differs from the wireless network N11 is established, and the negative effects can be prevented.

In the present embodiment, the network ID of the wireless network N12 is stored in the storage unit 55 of the provisioning device 50 so that the provisioning device 50 can join the wireless network N12. In a case where the provisioning device 50 is to join the wireless network N11 or the wireless network N12 which is managed by the gateway 30, the join processor 56b of the provisioning device 50 transmits the join request for joining the wireless network N12 to the gateway 30.

When the system manager 32 of the gateway 30 receives the join request transmitted from the provisioning device 50, the system manager 32 makes the provisioning device 50 join the wireless network N12 in cooperation with the security manager 33. In the present embodiment, basic operations of the second embodiment are same as the operations of the first embodiment except for making the provisioning device 50 join the wireless network N12 and transmitting the provisioning information which is set to the I/O device 11 to the gateway 30 (the security manager 33) via the wireless network N12. Therefore, detail explanations of the operations are omitted.

As described above, in the present embodiment, the provisioning device 50, which performs the provisioning with respect to the I/O device 11, can join the wireless network N12, and the provisioning information which is set to the I/O device 11 is transmitted to the gateway 30 (the security manager 33) via the wireless network N12. For the reason, same as the first embodiment, the provisioning information which is set to the I/O device 11 can be easily set to the security manager 33 of the gateway 30 with ensuring the security. Also, in the present embodiment, the negative effects, which occur in a case of making the provisioning device 50 join the wireless network N11, can be prevented.

Although an information setting device, an information setting method, a non-transitory computer-readable storage medium, and a wireless communication system according to embodiments of the present invention have been described above, the present invention is not restricted to the above-described embodiments, and can be freely modified within the scope thereof. For example, although the foregoing descriptions of the first embodiment and the modified examples of the first embodiment have been examples in which the provisioning device 50 performs the provisioning of the I/O device 11 after the provisioning device 50 join the wireless network N11, the provisioning device 50 may join the wireless network N11 (or the wireless network N12) and transmit the provisioning information to the gateway 30 after the provisioning device 50 completes to perform the provisioning with respect to the I/O device 11.

Also, although the foregoing descriptions of the embodiments have been examples in which the gateway 30 is equipped with the gateway unit 31, the system manager 32, and the security manager 33, the functions of the gateway unit 31, the system manager 32, and the security manager 33 may be implemented by separated devices respectively. Further, a function of communicating wirelessly with the I/O devices 10a through 10e and the routing devices 20a and 20b may be separated from the gateway unit 31 and the function may be implemented as a wireless access point device.

Also, although the foregoing descriptions of the embodiments have been examples in which the wireless communication system communicates wirelessly in conformity with ISA 100.11a, the wireless communication system may communicate wirelessly in conformity with WirelessHART (registered trademark).

As used herein, the following directional terms "forward, rearward, above, downward, right, left, vertical, horizontal, below, transverse, row and column" as well as any other similar directional terms refer to those directions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. An information setting device (50) comprising:
a first communicator (53) configured to communicate with a wireless device (11) by using a communication means other than a wireless network; a second communicator (54) configured to communicate via a first wireless network (N11) and a second wireless network (N12);
a setter (56a) configured to set a first information to the wireless device (11) by controlling the first communicator (53), the first information being necessary for making the wireless device (11) join the first wireless network (N11), the setter (56a) being configured to perform an out-of-band provisioning of the wireless device (11) in which the provisioning is performed by using the communication means other than the first wireless network (N11) and the second wireless network (N12); and
a transmitter (56d) configured to transmit the first information which is set by the setter (56a) to a manager (32, 33) via the second wireless network (N12) other than the first wireless network (N11) by controlling the second communicator (54), the manager (32, 33) managing the first wireless network (N11) and the second wireless network (N12).

2. The information setting device (50) according to claim 1, further comprising:
a processor (56b) configured to communicate with the manager (32, 33) by controlling the second communicator (54), the processor (56b) making the information setting device (50) join the second wireless network (N12).

3. The information setting device (50) according to claim 2, wherein
the processor (56b) is configured to perform a process for joining the second wireless network (N12) of which an identifier is different from an identifier of the first wireless network (N11) which the wireless device (11) is to join.

4. The information setting device (50) according to claim 1, wherein
the transmitter (56d) is configured to transmit a second information, which is obtained from the wireless device (11) and other than the first information, to the manager (32, 33) with the first information.

5. The information setting device (50) according to claim 1, further comprising:
an encryptor (56c) configured to encrypt the first information which is to be transmitted by the transmitter (56d).

6. The information setting device (50) according to claim 1, wherein in a case where the information setting device (50) receives a request for transmitting information which is transmitted from the manager (32, 33), the transmitter (56d) transmits the first information to the manager (32, 33).

7. An information setting method performed by an information setting device (50) comprising:
communicating, by a first communicator (53), with a wireless device (11) by using a communication means other than a wireless network ;
communicating, by a second communicator (54), via a first wireless network (N11) and a second wireless network (N12) ;
setting, by a setter (56a), a first information to the wireless device (11) by controlling the first communicator (53), the first information being necessary for making the wireless device (11) join the first wireless network (N11), the setter (56a) being configured to perform an out-of-band provisioning of the wireless device (11) in which the provisioning is performed by using the communication means other than the first wireless network (N11) and the second wireless network (N12); and
transmitting, by a transmitter (56d), the first information which is set by the setter (56a) to a manager (32, 33) via the second wireless network (N12) other than the first wireless network (N11) by controlling the second communicator (54), the manager (32, 33) managing the first wireless network (N11) and the second wireless network (N12).

8. The information setting method according to claim 7, further comprising:
making the information setting device (50) join the second wireless network (N12) before the first information is transmitted from the information setting device (50) to the manager (32, 33).

9. The information setting method according to claim 7, further comprising:
transmitting, by the transmitter (56d), a second information, which is obtained from the wireless device (11) and other than the first information, to the manager (32, 33) with the first information.

10. The information setting method according to claim 7, further comprising:
encrypting, by an encryptor (56c), the first information which is to be transmitted by the transmitter (56d).

11. The information setting method according to claim 7, further comprising:
transmitting, by the transmitter (56d), the first information to the manager (32, 33) in a case where the information setting device (50) receives a request for transmitting information which is transmitted from the manager (32, 33).

12. A non-transitory computer readable storage medium storing one or more information setting programs configured for execution by a computer, the one or more programs, when executed, cause the computer to implement the information setting method according to claim 7.

13. The computer readable storage medium according to claim 12, wherein the one or more information setting programs comprise instructions for:
transmitting a second information, which is obtained from the wireless device (11) and other than the first information, to the manager (32, 33) with the first information.

14. The computer readable storage medium according to claim 12, wherein the one or more information setting programs comprise instructions for:
encrypting the first information which is to be transmitted by the transmitter (56d).

15. A wireless communication system comprising:
an information setting device (50), according to claim 1, configured to set a first information, which is necessary for making a wireless device (11) join a first wireless network (N11), to the wireless device (11), the information setting device (50) transmitting the first information, which is set to the wireless device (11), to a manager (32, 33) via a second wireless network (N12); and
the manager (32, 33) configured to set the first information, which is transmitted from the information setting device (50) which joins the second wireless network (N12), as authentication information for authenticating the wireless device (11).

## Patentansprüche

1. Informationseinstellvorrichtung (50), aufweisend:
einen ersten Kommunikator (53), der konfiguriert ist, um mit einer drahtlosen Vorrichtung (11) unter Verwendung einer Kommunikationseinrichtung, die von einem drahtlosen Netzwerk verschieden ist, zu kommunizieren;
einen zweiten Kommunikator (54), der konfiguriert ist, um über ein erstes drahtloses Netzwerk (N11) und ein zweites drahtloses Netzwerk (N12) zu kommunizieren;
einen Einsteller (56a), der konfiguriert ist, um erste Informationen an die drahtlose Vorrichtung (11) durch Steuern des ersten Kommunikators (53) einzustellen, wobei die ersten Informationen erforderlich sind, um zu bewirken, dass die drahtlose Vorrichtung (11) dem ersten drahtlosen Netzwerk (N11) beitritt, wobei der Einsteller (56a) konfiguriert ist, um eine Versorgung außerhalb des Bandes der drahtlosen Vorrichtung (11) durchzuführen, in welchem die Versorgung durchgeführt wird, indem die Kommunikationseinrichtung, die von dem ersten drahtlosen Netzwerk (N11) und dem zweiten drahtlosen Netzwerk (N12) verschieden ist, verwendet wird; und
einen Transmitter (56d), der konfiguriert ist, um die ersten Informationen, welche durch den Einsteller (56a) eingestellt sind, an einen Manager (32, 33) über das zweite drahtlose Netzwerk (N12), das von dem ersten drahtlosen Netzwerk (N11) verschieden ist, zu übertragen, indem der zweite Kommunikator (54) gesteuert wird, wobei der Manager (32, 33) das erste drahtlose Netzwerk (N11) und das zweite drahtlose Netzwerk (N12) verwaltet.

2. Informationseinstellvorrichtung (50) nach Anspruch 1, ferner aufweisend:
einen Prozessor (56b), der konfiguriert ist, um mit dem Manager (32, 33) zu kommunizieren, indem der zweite Kommunikator (54) gesteuert wird, wobei der Prozessor (56b) bewirkt, dass die Informationseinstellvorrichtung (50) dem zweiten drahtlosen Netzwerk (N12) beitritt.

3. Informationseinstellvorrichtung (50) nach Anspruch 2, wobei
der Prozessor (56b) konfiguriert ist, um einen Prozess durchzuführen zum Beitreten des zweiten drahtlosen Netzwerks (N12), von welchem ein Identifizierer von einem Identifizierer des ersten drahtlosen Netzwerks (N11), welchem die drahtlose Vorrichtung (11) beitritt, verschieden ist.

4. Informationseinstellvorrichtung (50) nach Anspruch 1, wobei
der Transmitter (56d) konfiguriert ist, um zweite Informationen, welche von der drahtlosen Vorrichtung (11) erhalten und von den ersten Informationen verschieden sind, an den Manager (32, 33) mit den ersten Informationen zu übertragen.

5. Informationseinstellvorrichtung (50) nach Anspruch 1, ferner aufweisend:
einen Verschlüssler (56c), der konfiguriert ist, um die ersten Informationen, welche durch den Transmitter (56d) zu übertragen sind, zu verschlüsseln.

6. Informationseinstellvorrichtung (50) nach Anspruch 1, wobei für den Fall, dass die Informationseinstellvorrichtung (50) eine Anfrage zum Übertragen von Informationen, welche von dem Manager (32, 33) übertragen sind, empfängt, der Transmitter (56d) die ersten Informationen an den Manager (32, 33) überträgt.

7. Informationseinstellverfahren, das durch eine Informationseinstellvorrichtung (50) durchgeführt wird, aufweisend:
Kommunizieren, durch einen ersten Kommunikator (53), mit einer drahtlosen Vorrichtung (11) unter Verwendung einer Kommunikationseinrichtung, die von einem drahtlosen Netzwerk verschieden ist;
Kommunizieren, durch einen zweiten Kommunikator (54), über ein erstes drahtloses Netzwerk (N11) und ein zweites drahtloses Netzwerk (N12);
Einstellen, durch einen Einsteller (56a), von ersten Informationen zu der drahtlosen Vorrichtung (11), indem der erste Kommunikator (53) gesteuert wird, wobei die ersten Informationen erforderlich sind, um zu bewirken, dass die drahtlose Vorrichtung (11) dem ersten drahtlosen Netzwerk (N11) beitritt, der Einsteller (56a) konfiguriert ist, um eine Versorgung außerhalb des Bandes der drahtlosen Vorrichtung (11), in welchem die Versorgung durchgeführt wird, durchzuführen, indem die Kommunikationseinrichtung verwendet wird, die von dem ersten drahtlosen Netzwerk (N11) und dem zweiten drahtlosen Netzwerk (N12) verschieden ist; und
Übertragen, durch einen Transmitter (56d), der ersten Informationen, welche durch den Einsteller (56a) eingestellt sind, an einen Manager (32, 33) über das zweite drahtlose Netzwerk (N12), das von dem ersten drahtlosen Netzwerk (N11) verschieden ist, indem der zweite Kommunikator (54) gesteuert wird, wobei der Manager (32, 33) das erste drahtlose Netzwerk (N11) und das zweite drahtlose Netzwerk (N12) verwaltet.

8. Informationseinstellverfahren nach Anspruch 7, ferner aufweisend:
Bewirken, dass die Informationseinstellvorrichtung (50) dem zweiten drahtlosen Netzwerk (N12) beitritt, bevor die ersten Informationen von der Informationseinstellvorrichtung (50) an den Manager (32, 33) übertragen werden.

9. Informationseinstellverfahren nach Anspruch 7, ferner aufweisend:
Übertragen, durch den Transmitter (56d), von zweiten Informationen, welche von der drahtlosen Vorrichtung (11) erhalten und von den ersten Informationen verschieden sind, an den Manager (32, 33) mit den ersten Informationen.

10. Informationseinstellverfahren nach Anspruch 7, ferner aufweisend:
Verschlüsseln, durch einen Verschlüssler (56c), der ersten Informationen, welche durch den Transmitter (56d) zu übertragen sind.

11. Informationseinstellverfahren nach Anspruch 7, ferner aufweisend:
Übertragen, durch den Transmitter (56d), der ersten Informationen an den Manager (32, 33) für den Fall, dass die Informationseinstellvorrichtung (50) eine Anfrage zum Übertragen von Informationen, welche von dem Manager (32, 33) übertragen werden, empfängt.

12. Nicht-transitorisches computerlesbares Speichermedium, das ein oder mehrere Informationseinstellprogramme speichert, die zum Ausführen durch einen Computer konfiguriert sind, wobei das eine oder die mehreren Programme, wenn sie ausgeführt werden, bewirkt/bewirken, dass der Computer das Informationseinstellverfahren nach Anspruch 7 implementiert.

13. Computerlesbares Speichermedium nach Anspruch 12, wobei das eine oder die mehreren Informationseinstellprogramme Anweisungen aufweist/aufweisen, um:
zweite Informationen, welche von der drahtlosen Vorrichtung (11) erhalten und von den ersten Informationen verschieden sind, an den Manager (32, 33) mit den ersten Informationen zu übertragen.

14. Computerlesbares Speichermedium nach Anspruch 12, wobei das eine oder die mehreren Informationseinstellprogramme Anweisungen aufweist/aufweisen, um:
die ersten Informationen, welche durch den Transmitter (56d) zu übertragen sind, zu verschlüsseln.

15. Drahtloses Kommunikationssystem, aufweisend:
eine Informationseinstellvorrichtung (50) nach Anspruch 1, die konfiguriert ist, um erste Informationen, welche erforderlich sind, um zu bewirken, dass eine drahtlose Vorrichtung (11) einem ersten drahtlosen Netzwerk (N11) beitritt, zu der drahtlosen Vorrichtung (11) einzustellen, wobei die Informationseinstellvorrichtung (50) die ersten Informationen, welche zu der drahtlosen Vorrichtung (11) eingestellt sind, an einen Manager (32, 33) über ein zweites drahtloses Netzwerk (N12) überträgt; und
den Manager (32, 33), der konfiguriert ist, um die ersten Informationen, welche von der Informationseinstellvorrichtung (50), welche dem zweiten drahtlosen Netzwerk (N12) beitritt, als Authentifizierungsinformationen zum Authentifizieren der drahtlosen Vorrichtung (11) einzustellen.

## Revendications

1. Dispositif de réglage d'informations (50) comprenant :
un premier communicateur (53) configuré pour communiquer avec un dispositif sans fil (11) en utilisant un moyen de communication autre qu'un réseau sans fil ;
un second communicateur (54) configuré pour communiquer via un premier réseau sans fil (N11) et un second réseau sans fil (N12) ;
un régleur (56a) configuré pour régler une première information sur le dispositif sans fil (11) en commandant le premier communicateur (53), la première information étant nécessaire pour amener le dispositif sans fil (11) à rejoindre le premier réseau sans fil (N11), le régleur (56a) étant configuré pour effectuer un provisionnement hors bande du dispositif sans fil (11) dans lequel le provisionnement est effectué en utilisant le moyen de communication autre que le premier réseau sans fil (N11) et le second réseau sans fil (N12) ; et
un transmetteur (56d) configuré pour transmettre la première information qui est réglée par le régleur (56a) à un gestionnaire (32, 33) via le second réseau sans fil (N12) autre que le premier réseau sans fil (N11) en commandant le second communicateur (54), le gestionnaire (32, 33) gérant le premier réseau sans fil (N11) et le second réseau sans fil (N12).

2. Dispositif de réglage d'informations (50) selon la revendication 1, comprenant en outre :
un processeur (56b) configuré pour communiquer avec le gestionnaire (32, 33) en commandant le second communicateur (54), le processeur (56b) amenant le dispositif de réglage d'informations (50) à rejoindre le second réseau sans fil (N12).

3. Dispositif de réglage d'informations (50) selon la revendication 2, dans lequel
le processeur (56b) est configuré pour effectuer un processus pour rejoindre le second réseau sans fil (N12) dont un identifiant est différent d'un identifiant du premier réseau sans fil (N11) que le dispositif sans fil (11) doit rejoindre.

4. Dispositif de réglage d'informations (50) selon la revendication 1, dans lequel
le transmetteur (56d) est configuré pour transmettre une seconde information, qui est obtenue à partir du dispositif sans fil (11) et autre que la première information, au gestionnaire (32, 33) avec la première information.

5. Dispositif de réglage d'informations (50) selon la revendication 1, comprenant en outre :
un crypteur (56c) configuré pour crypter la première information qui doit être transmise par le transmetteur (56d).

6. Dispositif de réglage d'informations (50) selon la revendication 1, dans lequel dans un cas où le dispositif de réglage d'informations (50) reçoit une demande pour transmettre des informations qui est transmise depuis le gestionnaire (32, 33), le transmetteur (56d) transmet la première information au gestionnaire (32, 33).

7. Procédé de réglage d'informations effectué par un dispositif de réglage d'informations (50) comprenant :
la communication, par un premier communicateur (53), avec un dispositif sans fil (11) en utilisant un moyen de communication autre qu'un réseau sans fil ;
la communication, par un second communicateur (54), via un premier réseau sans fil (N11) et un second réseau sans fil (N12) ;
le réglage, par un régleur (56a), d'une première information sur le dispositif sans fil (11) en commandant le premier communicateur (53), la première information étant nécessaire pour amener le dispositif sans fil (11) à rejoindre le premier réseau sans fil (N11), le régleur (56a) étant configuré pour effectuer un provisionnement hors bande du dispositif sans fil (11) dans lequel le provisionnement est effectué en utilisant le moyen de communication autre que le premier réseau sans fil (N11) et le second réseau sans fil (N12) ; et
la transmission, par un transmetteur (56d), de la première information qui est réglée par le régleur (56a) à un gestionnaire (32, 33) via le second réseau sans fil (N12) autre que le premier réseau sans fil (N11) en commandant le second communicateur (54), le gestionnaire (32, 33) gérant le premier réseau sans fil (N11) et le second réseau sans fil (N12).

8. Procédé de réglage d'informations selon la revendication 7, comprenant en outre
le fait d'amener le dispositif de réglage d'informations (50) à rejoindre le second réseau sans fil (N12) avant que la première information ne soit transmise du dispositif de réglage d'informations (50) au gestionnaire (32, 33).

9. Procédé de réglage d'informations selon la revendication 7, comprenant en outre :
la transmission, par le transmetteur (56d), d'une seconde information, qui est obtenue à partir du dispositif sans fil (11) et autre que la première information, au gestionnaire (32, 33) avec la première information.

10. Procédé de réglage d'informations selon la revendication 7, comprenant en outre :
le cryptage, par un crypteur (56c), de la première information qui doit être transmise par le transmetteur (56d).

11. Procédé de réglage d'informations selon la revendication 7, comprenant en outre :
la transmission, par le transmetteur (56d), de la première information au gestionnaire (32, 33) dans un cas où le dispositif de réglage d'informations (50) reçoit une demande pour transmettre des informations qui est transmise depuis le gestionnaire (32, 33).

12. Support de stockage lisible par ordinateur non transitoire stockant un ou plusieurs programmes de réglage d'informations configurés pour l'exécution par un ordinateur, les un ou plusieurs programmes, lorsqu'ils sont exécutés, amènent l'ordinateur à mettre en oeuvre le procédé de réglage d'informations selon la revendication 7.

13. Support de stockage lisible par ordinateur selon la revendication 12, dans lequel les un ou plusieurs programmes de réglage d'informations comprennent des instructions pour :
transmettre une seconde information, qui est obtenue à partir du dispositif sans fil (11) et autre que la première information, au gestionnaire (32, 33) avec la première information.

14. Support de stockage lisible par ordinateur selon la revendication 12, dans lequel les un ou plusieurs programmes de réglage d'informations comprennent des instructions pour :
crypter la première information qui doit être transmise par le transmetteur (56d).

15. Système de communication sans fil comprenant :
un dispositif de réglage d'informations (50), selon la revendication 1, configuré pour régler une première information, qui est nécessaire pour amener un dispositif sans fil (11) à rejoindre un premier réseau sans fil (N11), au dispositif sans fil (11), le dispositif de réglage d'informations (50) transmettant la première information, qui est réglée sur le dispositif sans fil (11), à un gestionnaire (32, 33) via un second réseau sans fil (N12) ; et
le gestionnaire (32, 33) configuré pour régler la première information, qui est transmise depuis le dispositif de réglage d'informations (50) qui rejoint le second réseau sans fil (N12), en tant qu'information d'authentification pour authentifier le dispositif sans fil (11).
